(19) Europäisches Patentamt
European Patent Office
Office européen des brevets

(11) Publication number: 0 344 837 A1

# (12) EUROPEAN PATENT APPLICATION

(21) Application number: 89201306.1

(22) Date of filing: 22.05.89

(51) Int. Cl.4: C01B 25/36 , C01B 25/45 , C01B 33/26 , C01B 35/14 , B01J 29/02

(30) Priority: 03.06.88 GB 8813121

(43) Date of publication of application: 06.12.89 Bulletin 89/49

(84) Designated Contracting States: BE CH DE FR GB IT LI NL SE

(71) Applicant: SHELL INTERNATIONALE RESEARCH MAATSCHAPPIJ B.V.
Carel van Bylandtlaan 30
NL-2596 HR Den Haag(NL)

(72) Inventor: Clark, David Michael
Badhuisweg 3
NL-1031 CM Amsterdam(NL)
Inventor: Dogterom, Ronald Jan
Badhuisweg 3
NL-1031 CM Amsterdam(NL)

(74) Representative: Aalbers, Onno et al
P.O. Box 302
NL-2501 CH The Hague(NL)

## (54) Novel crystalline aluminophosphates and related compounds.

(57) Crystalline aluminophosphates and related compounds having in the as-synthesized anhydrous form the chemical composition:

$mR(X_nAl_qP_x)O_2$, wherein R represents a diamine having formula I

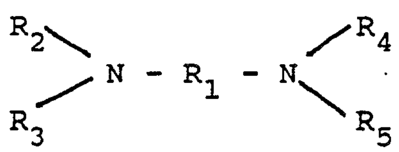

(I)

wherein $R_1$ represents a $C_6$-$C_{14}$ carbon chain which may contain one or more inert substituents and each of $R_2$, $R_3$, $R_4$ and $R_5$ represents a hydrogen atom or an alkyl group which may contain one or more inert substituents, X represents one or more elements which oan be substituted for Al and/or P, wherein

$m = 0.01\text{-}0.33$

$n = 0\text{-}0.40$

$q = 0.30\text{-}0.60$

$x = 0.30\text{-}0.60$

and wherein $n + q + x = 1$.

The compounds can be prepared from a forming solution or gel comprising a source of aluminium, a source of phosphorus, optionally a source of at least one component X and a diamine according to formula I, which mixture is kept at elevated temperature for a period of time sufficient to produce a crystalline aluminophosphate or related compound followed by separating off the crystalline product obtained and drying, and which may subsequently be calcined.

EP 0 344 837 A1

# NOVEL CRYSTALLINE ALUMINOPHOSPHATES AND RELATED COMPOUNDS

The present invention relates to novel crystalline aluminophosphate compositions and a process for preparing such aluminophosphate compositions.

Crystalline aluminophosphate compositions are well known materials which find a promising reception in industry as new generations of molecular sieves, catalyst carriers as well as catalysts. For instance, in United States patent specification No. 4,310,440, the preparation of various crystalline aluminophosphates is described from reaction mixtures containing inter alia organic templating agents including tetra-propylammonium hydroxide, quinuclidine, t-butylamine and ethylenediamine.

Classes of these materials comprise compositions crystallized in the $AlPO_4$, SAPO (siliconaluminophosphate), MeAPO (metalloaluminophosphate) and ElAPO (non-metal substituted aluminophosphate) families.

It has now been found that novel crystalline aluminophosphates and related compounds, e.g. of the $AlPO_4$-, SAPO- and MeAPO-type can be prepared from reaction gels or solutions when use is made of specific molar ratios of the forming components utilizing certain organic diamine compounds.

The present invention thus relates to crystalline aluminophosphates and related compounds having in the as-synthesized anhydrous form the chemical composition: $mR(X_n\ Al_q\ P_x\ )O_2$, wherein R represents a diamine having formula I

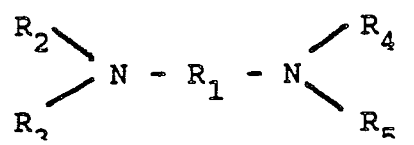

(I)

wherein $R_1$ represents a $C_6$-$C_{14}$ carbon chain which may contain one or more inert substituents and each of $R_2$, $R_3$, $R_4$ and $R_5$ represents a hydrogen atom or an alkyl group which may contain one or more inert substituents, X represents one or more elements which can be substituted for Al and/or P, wherein
m = 0.01-0.33
n = 0-0.40
q = 0.30-0.60
x = 0.30-0.60
and wherein n + q + x = 1,
and having an X-ray diffraction pattern containing at least the following lines:

| d(A) | Intensity |
|---|---|
| 16.10-15.20 | vs |
| 7.89-7.69 | w |
| 4.44-4.39 | w/vw |
| 4.23-4.18 | w/vw |
| 3.64-3.61 | w/vw |
| 3.42-3.40 | vw |

In particular, the present invention relates to aluminophosphates and related compounds having the chemical composition as described hereinabove, wherein
m = 0.20-0.30
n = 0-0.30
q = 0.44-0.60 and
x = 0.44-0.60

Preferred organic diamine compounds comprise those wherein $R_1$ represents a $C_6$-$C_{12}$ carbon chain, in particular a $C_6$ and/or $C_8$ carbon chain, and each of $R_2$, $R_3$, $R_4$ and $R_5$ represents a hydrogen atom or a lower alkyl group, in particular a hydrogen atom.

As element X which can be substituted for aluminium and/or phosphorus in the crystalline aluminophosphates and related compounds according to the present invention can suitably be used one or

more of beryllium, magnesium, titanium, manganese, iron, cobalt, zinc, vanadium, nickel, chromium, silicon, lithium, boron, gallium, germanium and arsenic. Typically, said element will be one or more of magnesium, titanium, manganese, iron, cobalt, zinc, nickel, silicon, gallium or germanium, and preferably one or more of magnesium, manganese, titanium, iron, cobalt and silicon.

An example of a novel crystalline aluminophosphate according to the present invention and belonging to the $AlPO_4$-class has in the as-synthesized anhydrous form the following chemical composition: 1.79 R $(Al_{0.5}P_{0.5})O_2$ wherein R is 1,8 octadiamine and having an X-ray diffraction pattern as given in Table I.

A further example, belonging to the SAPO-class has in the as-synthesized anhydrous form the following chemical composition:
1.8 R $(Si_{0.11}Al_{0.45}P_{0.44})O_2$ wherein R is 1,8 octadiamine and having an X-ray diffraction pattern as given in Table II.

An example, belonging to the class of MeAPO's has in the as-synthesized anhydrous form the chemical composition: 1.75 R $(Co_{0.03}Al_{0.5}P_{0.47})O_2$ wherein R is 1,8 octadiamine and having an X-ray diffraction pattern as given in Table III.

The present invention also relates to a process for preparing novel crystalline aluminophosphates as well as related compounds as defined hereinbefore from a forming solution or gel comprising a source of aluminium, a source of phosphorus, optionally a source of at least one component X and a diamine according to formula I, which mixture is kept at elevated temperature for a period of time sufficient to produce a crystalline aluminophosphate or related compound followed by separating off the crystalline product obtained and drying, in which solution or gel the various components are initially present in the following molar ratios:

| | |
|---|---|
| R : | $Al_2O_3$ = 0.1-3 |
| X : | $Al_2O_3$ = 0 - 2 |
| P : | $Al_2O_3$ = 0.3-1.3 |
| $H_2O$: | $Al_2O_3$ = 40-500 |

The crystalline aluminophosphates and related compounds according to the present invention are preferably prepared from a forming solution or gel in which the various components are initially present in the following molar ratios:

| | |
|---|---|
| R : | $Al_2O_3$ = 0.15-2 |
| X : | $Al_2O_3$ = 0 - 2 |
| P : | $Al_2O_3$ = 0.4-1.25 |
| $H_2O$ : | $Al_2O_3$ = 45-320 |

Crystalline aluminophosphates and related compounds according to the present invention are normally prepared from an aqueous forming solution or gel at a temperature between 100 °C and 220 °C, in particular between 120 °C and 200 °C.

The process according to the present invention can be carried out at autogeneous pressure as well as at a more elevated pressure. Normally, the novel crystalline aluminophosphates and related compounds will be produced when the forming solution or gel has been kept under the appropriate conditions for a period of time allowing the proper structure to be formed.

Preferably, the process according to the present invention is carried out for a period of time ranging between 24 hours and 168 hours.

As organic diamine compounds can suitably be used diamines according to formula I wherein $R_1$ represents a $C_6$-$C_{12}$ carbon chain, in particular a $C_6$ and/or $C_8$ carbon chain, and each of $R_2$, $R_3$, $R_4$ and $R_5$ represents a hydrogen atom or a lower alkyl group, in particular a hydrogen atom.

Examples of suitable aluminium sources comprise aluminium oxide, such as gibbsite, boehmite, pseudo-boehmite and aluminium alkoxides, preferably aluminium isopropoxide.

Suitable phosphorus sources comprise phosphorus acids, phosphorus oxides, phosphates and phosphites, preferably ortho-phosphoric acid.

Examples of suitable sources of X comprise the appropriate chlorides, iodides, bromides, nitrates, sulphates and acetates, preferably acetates, as well as oxides.

If desired, the crystalline aluminophosphates or related compounds produced can be calcined after drying to produce the corresponding, substantially template-free aluminophosphates or related compounds.

When subjecting the crystalline aluminophosphates or related compounds to the appropriate heat-treatment, in particular to a temperature up to 600 °C under reduced pressure, the crystalline structure is substantially preserved.

The present invention, therefore, also relates to substantially template-free crystalline aluminophosphates or related compounds corresponding with crystalline aluminophosphates or related compounds having in the as-synthesized anhydrous form the chemical composition $mR(X_nAl_qP_x)O_2$ wherein R, X, m, n, q and x are as defined hereinbefore obtainable by subjecting the corresponding materials to an appropriate heat-treatment.

It has been found that agitation can advantageously be applied to produce the desired crystalline aluminophosphates or related compounds from the forming solution or gel.

The novel crystalline aluminophosphates and related compounds according to the present invention can suitably be used as molecular sieves, catalysts or as catalyst carriers in the operation of various catalytic processes. If desired, one or more (catalytically) active species, in particular protons and/or precursors thereof and/or one or more metal(s) compounds of Group III and/or the Transition Metals and/or Rare Earth Metals and/or precursors thereof can be incorporated into the crystalline aluminophosphates and related compounds according to the present invention.

They can be incorporated by well-known techniques such as, for example, impregnation and ion-exchange.

The invention will now be illustrated by the following Examples.

Example I

A crystalline $AlPO_4$ was prepared by mixing 27.2 grammes of aluminium isopropoxide, 15.4 grammes of 85% $H_3PO_4$, 9.6 grammes of 1,8 octadiamine and 48.1 grammes of water to form a mixture having a pH between 5 and 7.5. This mixture was consequently maintained at 160 °C for 72 hours until a crystalline compound was obtained.

After synthesis the crystalline compound produced was separated from the reaction mixture by filtration, water washed, and dried at 110 °C.

The crystalline compound obtained had in the anhydrous form the following chemical composition: 1.79 R $(Al_{0.5}P_{0.5})O_2$ (R = 1,8 octadiamine) and an X-ray diffraction pattern containing at least the lines as given in Table I below.

TABLE I

| d(A) | Intensity |
|---|---|
| 15.56 | 100 |
| 7.77 | 20 |
| 4.41 | 7 |
| 4.20 | 5 |
| 3.63 | 8 |
| 3.41 | 4 |

Example II

A crystalline $AlPO_4$ having similar properties as described hereinabove was prepared in an experiment which was carried out in a substantially analogous manner as described in Example I, except that 1,6 hexadiamine was used as organic diamine.

Example III

A crystalline SAPO was prepared in an experiment which was carried out in a substantially analogous manner as described in Example I, except that the reaction mixture contained 86.9 grammes of water and additionally 5.2 grammes of silicasol (Ludox AS; 38.5% $SiO_2$, 61.5% water).

The crystalline SAPO obtained had in the anhydrous form the following chemical composition: 1.8 R $(Si_{0.11}Al_{0.45}P_{0.44})O_2$ (R = 1,8 octadiamine) and an X-ray diffraction pattern containing at least the lines as given in Table II below.

Table II

| d(A) | Intensity |
|---|---|
| 15.53 | 100 |
| 7.73 | 18 |
| 4.41 | 9 |
| 4.20 | 6 |
| 3.63 | 10 |
| 3.41 | 6 |

Example IV

A crystalline CoAPO was prepared in an experiment which was carried out in a substantially analogous manner as described in Example I, except that the reaction mixture contained 47.6 grammes of water and additionally 2.17 grammes of $Co(CH_3COO)_2.4H_2O$.

The crystalline CoAPO obtained had in the anhydrous form the following chemical composition: 1.75 R $(Co_{0.03}Al_{0.5}P_{0.47})O_2$ (R = 1,8 octadiamine) and an X-ray diffraction pattern containing at least the lines as given in Table III below.

Table III

| d(A) | Intensity |
|---|---|
| 15.98 | 100 |
| 7.86 | 14 |
| 4.42 | 20 |
| 4.21 | 8 |
| 3.64 | 17 |
| 3.41 | 10 |

Example V

The experiment described in Example I was repeated but using boehmite as the aluminium source. A crystalline compound having an X-ray pattern containing at least the lines given in Table I was obtained.

Similar results were obtained when using pseudo-boehmite as the aluminium source.

Example VI

The experiment described in Example I was repeated but the reaction temperature was kept at 120 °C. A crystalline compound having an X-ray pattern containing at least the lines given in Table I was obtained.

Example VII

The experiment described in the previous Example was repeated but using a reaction temperature of 200 °C. Again, a crystalline compound having an X-ray pattern containing at least the lines given in Table I was obtained.

Example VIII

The experiment described in Example I was carried out again but using only half the amount of 1,8 octadiamine (4.8 g) whilst homogenizing the mixture of phosphoric acid, water and 1,8 octadiamine with the intake aluminium isopropoxide prior to the elevation of the temperature. The pH of the synthesis mixture amounted to 5.7. Again, a crystalline compound having an X-ray pattern containing at least the lines given in Table I was obtained.

Example IX

The experiment described in the previous Example was repeated using twice the amount of 1,8 octadiamine but only 0.6 mole of $P_2O_5$ per mole of alumina intake. This was effected by providing a mixture containing 9.2 grammes of 85% $H_3PO_4$, 9.6 grammes of 1,8 octadiamine and 50.4 grammes of water which was homogenized with 27.2 grammes of aluminium isopropoxide prior to the elevation of the temperature. Again, a crystalline compound having an X-ray pattern containing at least the lines given in Table I was obtained.

Example X

A mixture was provided from 7.7 grammes of 85% $H_3PO_4$, 4.8 grammes of 1,8 octadiamine and 93.5 grammes of water and this mixture was homogenized with 13.6 grammes of aluminium isopropoxide prior to the elevation of the temperature. The synthesis mixture having an initial pH of 5.2 was kept at 160 °C for a period of 72 hours. Again, a crystalline compound having an X-ray pattern containing at least the lines given in Table I was obtained.

Example XI

The experiment described in Example I was repeated but using 1,10 decadiamine. Again, a crystalline compound was obtained having a (slightly shifted) X-ray pattern containing in essence at least the lines given in Table I.

**Claims**

1. Crystalline aluminophosphates and related compounds having in the as-synthesized anhydrous form the chemical composition:
$mR(X_nAl_qP_x)O_2$, wherein R represents a diamine having formula I

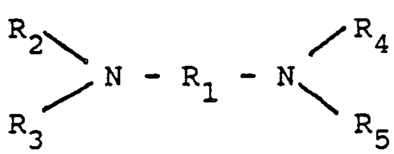

(I)

wherein $R_1$ represents a $C_6$-$C_{14}$ carbon chain which may contain one or more inert substituents and each of $R_2$, $R_3$, $R_4$ and $R_5$ represents a hydrogen atom or an alkyl group which may contain one or more inert substituents, X represents one or more elements which can be substituted for Al and/or P, wherein
m = 0.01-0.33
n = 0-0.40
q = 0.30-0.60
x = 0.30-0.60
and wherein n + q + x = 1,
and having an X-ray diffraction pattern containing at least the following lines:

| d(A) | Intensity |
|---|---|
| 16.10-15.20 | vs |
| 7.89-7.69 | w |
| 4.44-4.39 | w/vw |
| 4.23-4.18 | w/vw |
| 3.64-3.61 | w/vw |
| 3.42-3.40 | vw |

2. Crystalline aluminophosphates and related compounds according to claim 1, wherein m = 0.20-0.30
n = 0-0.30
q = 0.44-0.60 and
x = 0.44-0.60

3. Crystalline aluminophosphates and related compounds according to claim 1 or 2, wherein $R_1$ represents a $C_6$-$C_{12}$ carbon chain, preferably a $C_6$ and/or $C_8$ carbon chain.

4. Crystalline aluminophosphates and related compounds according to any one of claims 1-3, wherein each of $R_2$, $R_3$, $R_4$ and $R_5$ represents a hydrogen atom or a lower alkyl group, preferably a hydrogen atom.

5. Crystalline aluminophosphates and related compounds according to any one of claims 1-4, wherein element X represents one or more of beryllium, magnesium, titanium, manganese, iron, cobalt, zinc, vanadium, nickel, chromium, silicon, lithium, boron, gallium, germanium and arsenic, preferably one or more of magnesium, manganese, titanium, iron, cobalt and silicon.

6. Crystalline aluminophosphates and related compounds according to any one of claims 1-5, wherein one or more (catalytically) active species have been incorporated, preferably protons and/or precursors thereof and/or one or more metal(s) compounds of Group III and/or the Transition Metals and/or Rare Earth Metals and/or precursors thereof.

7. A process for preparing crystalline aluminophosphates or related compounds as claimed in claim 1 from a forming solution or gel comprising a source of aluminium, a source of phosphorus, optionally a source of at least one component X and a diamine according to formula I, which mixture is kept at elevated temperature for a period of time sufficient to produce a crystalline aluminophosphate or related compound followed by separating off the crystalline product obtained and drying, in which solution or gel the various components are initially present in the following molar ratios:

| | |
|---|---|
| R : | $Al_2O_3$ = 0.1-3 |
| X : | $Al_2O_3$ = 0 - 2 |
| P : | $Al_2O_3$ = 0.3-1.3 |
| $H_2O$: | $Al_2O_3$ = 40-500 |

8. A process according to claim 7, wherein the various components in the forming solution or gel are initially present in the following molar ratios:

| | |
|---|---|
| R : | $Al_2O_3$ = 0.15-2 |
| X : | $Al_2O_3$ = 0 - 2 |
| P : | $Al_2O_3$ = 0.4-1.25 |
| $H_2O$ : | $Al_2O_3$ = 45-320 |

9. A process according to claim 7 or 8, wherein the temperature is kept between 100 °C and 220 °C.

10. A process according to any one of claims 7-9, wherein the forming solution or gel is kept for a period of time ranging between 24 and 168 hours under crystal-forming conditions.

11. A process according to any one of claims 7-10, wherein use is made of aluminium oxide, boehmite, pseudo-boehmite or aluminium alkoxides as source of aluminium, preferably of aluminium isopropoxide.

12. A process according to any one of claims 7-11, wherein use is made of phosphorus acids, phosphorus oxides, phosphates or phosphites as source of phosphorus, preferably of ortho-phosphoric acid.

13. A process according to any one of claims 7-12, wherein use is made of components X in the form of the appropriate chlorides, iodides, bromides, sulphates, nitrates or acetates, or oxides, preferably the acetates.

14. A process according to any one of claims 7-13, wherein use is made of a diamine in which $R_1$ represents a $C_6$-$C_{12}$ carbon chain, preferably a $C_6$ and/or $C_8$ carbon chain.

15. A process according to any one of claims 7-14, wherein use is made of a diamine in which each of $R_2$, $R_3$, $R_4$ and $R_5$ represents a hydrogen atom or a lower alkyl group, preferably a hydrogen atom.

16. A process according to any one of claims 7-15, wherein the crystalline product obtained is calcined.

17. A process for carrying out catalytic reactions, wherein use is made of a crystalline aluminophosphate or related compound as claimed in any one of claims 1-6.

18. Substantially template-free crystalline aluminophosphates or related compounds corresponding to crystalline aluminophosphates or related compounds having in the as-synthesized anhydrous form the chemical composition $mR(X_nAl_qP_x)O_2$ wherein R, X, m, n, q and x are as defined hereinbefore, obtainable by subjecting the corresponding materials to an appropriate heat-treatment.

European Patent Office

# EUROPEAN SEARCH REPORT

Application Number

EP 89 20 1306

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 043 562 (UNION CARBIDE CORP.) & US-A-4 310 440 (Cat. D,A)<br>----- | | C 01 B 25/36<br>C 01 B 25/45<br>C 01 B 33/26<br>C 01 B 35/14<br>B 01 J 29/02 |
| | | | **TECHNICAL FIELDS SEARCHED (Int. Cl.4)** |
| | | | C 01 B 25/00<br>C 01 B 33/00 |

The present search report has been drawn up for all claims

| Place of search | Date of completion of the search | Examiner |
|---|---|---|
| THE HAGUE | 09-08-1989 | BREBION J.CH. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)